# EUROPÄISCHE PATENTSCHRIFT

(11) **EP 2 984 814 B1**
(45) Veröffentlichungstag und Bekanntmachung des Hinweises auf die Patenterteilung: **24.11.2021**
(21) Anmeldenummer: 14721220.3
(22) Anmeldetag: 04.04.2014
(51) Int. Cl.: H04N 1/32

(54) **ERZEUGUNG UND ERKENNUNG VON FÄLSCHUNGSSICHER DRUCKBAREN BILDINFORMATIONSDATEN**
GENERATION AND RECOGNITION OF IMAGE INFORMATION DATA THAT CAN BE PRINTED IN A FORGERY-PROOF MANNER
PRODUCTION ET RECONNAISSANCE DE DONNÉES D'INFORMATIONS D'IMAGES IMPRIMABLES INFALSIFIABLES

(30) Priorität: 10.04.2013 DE 102013103613
(43) Veröffentlichungstag der Anmeldung: 17.02.2016
(73) Patentinhaber: Snaptrust GmbH, 14467 Potsdam (DE)
(72) Erfinder: Göktekin, Cüneyt, 14469 Potsdam (DE)
(74) Vertreter: Farago-Schauer, Peter Andreas
(86) Internationale Anmeldenummer: PCT/EP2014/056820
(87) Internationale Veröffentlichungsnummer: WO 2014/166837

(56) Entgegenhaltungen:
- DE-A1- 10 211 982
- US-A1- 2001 002 213
- US-A1- 2006 072 778
- None

## Beschreibung

Die vorliegende Erfindung betrifft ein Verfahren zur Erzeugung von fälschungssicher druckbaren Bildinformationsdaten, die mit konventionellen Druckern oder Druckverfahren druckbar sind, und die einfach mittels eines Kamerageräts wie beispielsweise eines Smartphones decodierbar oder erkennbar sind.

Nach Angaben der World Customs Organization (Brüssel), nimmt eine wirtschaftliche Auswirkung von in Verkehr gebrachten, gefälschten Waren in einer globalen Wirtschaft immer von Jahr zu Jahr zu. Aus diesem Grund und da beispielsweise Smartphones weit verbreitet, relativ kostengünstig und für eine Authentifizierung von auf einer Verpackung aufgebrachten Codes gut geeignet sind, werden zunehmend geeignete Verfahren hierfür entwickelt und angewendet.

Beispielsweise bietet AlpVision ein Produkt "Varnish Cryptoglyph"® im Markt an, das in einer Lackschicht für das menschliche Auge unsichtbare Mikro-Löcher als ein Pseudo-Zufallsmuster einbringt. Die unsichtbaren Mikrolöcher werden dabei in Faltschachteln, Blisterverpackungen und Etiketten während eines Druckprozesses eingebracht. Eine Software-Applikation auf dem Apple-iPhone 4 Smartphone nimmt dabei eine entsprechende Authentifizierung vor. Jedoch können die Mikrolöcher nur mit relativ großem Aufwand eingebracht werden, und es ist ein spezieller Lack dafür erforderlich.

Spezielle Labels, wie beispielsweise Hologramm-Etiketten, Guilloche-Muster-Etiketten, die das Bild je nach Betrachtungswinkel verändern oder erst mit speziellen Raster-Filtern sichtbar werden lassen, sind teuer in der Herstellung und für den Endkunden schwer handhabbar. Zudem werden auch von Fälschern zunehmend Standard Hologramme mittlerweile kopiert. Auch hier gibt es dazu bereits Smartphone basierte Lösungen beispielsweise von InkSure und Jura JSP GmbH.

US 20120243797 A1 offenbart ein Verfahren, bei dem auf einer Verpackung ein Bild mit Störstellen aufgebracht wird, das beispielsweise mit einem Smartphone abfotografiert und instantan authentifiziert werden kann. Die Störstellen sind dabei so klein, dass sie für das menschliche Auge nicht wahrnehmbar sind. Schwarzweiß oder Farbstörungen mit relativ hohen Kontrasten sind jedoch leicht fotografierbar und entsprechend leicht mit einem Drucker auch wieder druckbar.

Tremeau et.al. veröffentlichen im Artikel "Recent Trends in Color Image Watermarking" in der Zeitschrift "Journal of Imaging Science and Technology, 2009, Vol. 53(1), 10201 S.1-15" verschiedene Verfahren für Wasserzeichen. Dabei wird beispielsweise vorgeschlagen, die Farben eines Bildes in quantisierten Stufen und gemäß einer vorgegebenen Verteilung anzuwenden. Bevorzugt sollen auch Farben mit einem kleinen Farbunterschied verwendet werden, wobei es schwierig sei, eine Qualität der Erkennung der kleinen Farbunterschiede zu bestimmen. Es wird dabei auch auf eine Halbton Farbgebung hingewiesen.

Thomas et. al. veröffentlichen im Artikel "Image Watermarking based on color quantization process" in der Zeitschrift "Electronic Imaging 2007, Int. Society for Optics and Photonics, 2007, S. 650603" ein Verfahren für Wasserzeichen bzw. um eine Nachricht in einem Bild zu verstecken, ohne dass die Nachricht mit dem Auge erkannt werden kann.

Chareyon et. al. veröffentlichen im Artikel "Watermarking and authentication of color images based on segmentation of the xyY color space" in der Zeitschrift "J. Imaging Science and Technology, 2006, Vol.50(5): 411-423" ein Verfahren, mit dem ein Wasserzeichen durch eine farbliche Veränderung in bestimmten Bereichen gemäß einem Muster im Bild versteckt werden kann.

Oztan et. al. veröffentlichen im Artikel "Pre-separation clustered-dot color halftone watermarks: Separation estimation based on spatial frequency content" in der Zeitschrift "J. of Electronic Imaging , 2010, Vol.19(4), 43007, S.1-12" ein Verfahren, mit dem CMYK Ausdrucke über einen RGB Scanner erfassbar sind.

Chen et. al. veröffentlichen im Artikel "User-friendly random-grid based visual secret sharing" in der Zeitschrift IEEE, Trans. on Circuits and Systems for Video Techn., Vol. 21(11), 2011, 1693-1703" ein Verfahren, mit dem ein oder zwei geheime Bilder oder Logos in einem Bild verborgen werden können.

Surekha et. al. veröffentlichen im Artikel "Digital Image Ownership Verification based on spatial Correlation of Colors" in der Publikation "Image Processing (IPR 2012), IET Conference on IET, 2012, S.1-5" ein Verfahren, mit dem ein Wasserzeichen in zwei Teilbilder aufgespalten wird, wobei ein erstes Teilbild beim Druck eingebracht wird und ein zweites Teilbild während der Erkennung des ersten Teilbilds verwendet wird, um das Wasserzeichens zu erkennen.

Simske et. al. veröffentlichen im Artikel "Revenge of physical - mobile color barcode solutions to security challenges" in der Publikation "Proc. Optical Document Security, 2010, S.184-197" ein Verfahren zur Auswahl von Farben für Barcodes.

Ebenso werden in den Dokumenten WO2004028140 A1, US20080247002 A1 und US5315098 A Verfahren für das Einbringen und Erkennen von für das Auge verborgenen Wasserzeichen vorgestellt.

DE10211982A1 offenbart ein Verfahren zu einem unsichtbaren Markieren eines Bildes, wobei das Bild in eine Vielzahl von Blöcken unterteilt wird und in einem jeweiligen Block ein Farbwert mindestens eines Bildpunktes darin verändert wird, um den jeweiligen Block zu markieren, der vorher durch einen vorbestimmten Code als der zu markierende Block bestimmt wurde.

US20060072778A1 offenbart ein anderes Verfahren zu einem unsichtbaren Markieren eines Bildes gemäß dem Oberbegriff der vorliegenden unabhängigen Ansprüche, wobei das Bild in eine Vielzahl von Bildpunkten unterteilt wird und jeweilige zu markierende Bildpunkte nur geringfügig von einer ursprünglichen Farbe des Bildpunkts und einer Farbumgebung abweichen, um "unsichtbar" zu bleiben.

Darüber hinaus gibt es Lösungen die einen sehr großen Kopierschutz bieten, jedoch spezielle Geräte und Lacke erfordern, wobei die entsprechenden Druckverfahren sehr teuer und für viele Anwendungen daher ungeeignet sind. Für die Erkennung sind oft zahlreiche Kopierschutzmerkmale beispielsweise auf Geldscheinen eingebracht, die es insbesondere für Endkunden unmöglich machen, diese alle zu erkennen. Mit Smartphones jedoch sind solche Merkmale jedoch als Muster abspeicherbar und vergleichbar mit dem jeweiligen Muster.

### Zusammenfassung der Erfindung

Daher besteht eine Aufgabe der Erfindung, um die Nachteile aus dem Stand der Technik zu beseitigen, in der Bereitstellung eines Verfahrens zum Erzeugen von möglichst fälschungssicheren Bildinformationsdaten, die mit einem gewöhnlichen Druckverfahren auf Papier, Karton oder dergleichen druckbar sind und die mit einem bloßen, menschlichen Auge nicht erkennbar und dennoch mit einem Kameragerät wie beispielsweise einem kamerabasierten Smartphone gut identifizierbar sind.

Die vorstehenden Aufgaben sowie weitere der Beschreibung zu entnehmende Aufgaben werden von einem Verfahren zur Erzeugung von fälschungssicher druckbaren Bildinformationsdaten bzw. einem Verfahren zur Erkennung der Bildinformationsdaten gemäß den Merkmalen der unabhängigen Ansprüche 1 bzw. 13 gelöst. Weitere vorteilhafte Ausführungsformen der Erfindung sind in den abhängigen Ansprüchen angegeben.

Die mit der vorliegenden Erfindung erzielten Vorteile bestehen insbesondere darin, dass die fälschungssicheren Bildinformationsdaten mit konventionellen Druckverfahren oder Druckvorrichtungen auf Papier oder Karton oder dergleichen aufgebracht werden können. Die Produktion oder der Druck der fälschungssicheren Bildinformationsdaten auf Papieren, Karton oder Verpackungen erfordert im Gegensatz zu anderen Verfahren gemäß dem Stand der Technik nahezu keine Anpassungszeit. Auch können die fälschungssicheren Bildinformationsdaten sehr gut bevorzugt auf schon bestehenden Verpackungen oder Etiketten in einem vorher bestimmten Design integriert oder aufgebracht werden.

Insbesondere dadurch, dass in den Bildinformationsdaten Informationsbildpunkte oder Informationspixel in den ersten Rasterbereichen bevorzugt eng und klein und bevorzugt durch nur schwach unterschiedliche Farbwerte codiert gedruckt werden, sind diese Farbwerte oder Informationspixel mit dem bloßen Auge nicht mehr erkennbar oder voneinander unterscheidbar. Bevorzugt werden dabei die Farbwerte bzw. die Informationsfarbwerte zur Codierung so schwach kontrastiert, dass sie selbst unter einem Mikroskop kaum und zumindest nicht sicher unterscheidbar erkannt werden können.

Für eine versuchte Fälschung kommt noch erschwerend hinzu, dass in den Bildinformationsdaten neben den Informationspixeln auch noch Störpixel in benachbarten Störfeldern angeordnet sind. Dadurch wird eine mikroskopisch visuelle Wahrnehmung oder Kamera- oder Scanner basierte Detektion der Informationspixel weiter erschwert. Bevorzugt sind dabei den Störpixeln zugeordnete Störfarbwerte und Informationsfarbwerte der Informationspixel nur so leicht abweichend bzw. kontrastiert bestimmt und gedruckt, dass eine Differenzierung bzw. Diskriminierung nur schwer vornehmbar ist. Gerade auch, indem benachbarte Störpixel nur einen so kleinen Farbwertunterschied zu den Informationspixeln aufweisen, der gerade noch durch das Kameragerät mit einer bestimmten Software erkennbar und diskriminierbar ist, wird eine Fälschung erheblich erschwert. Zudem erzeugt jedes Druckergerät einen gerätespezifischen und von anderen Druckergeräten leicht unterschiedlichen Druck als Schwarzweiß- oder Farbdruck.

Indem die Bildinformationsdaten zunächst erzeugt, dann durch ein Druckergerät gedruckt und danach vermessen werden, können selbst auch die gerätespezifischen, gedruckten Farbwerte der Bildinformationsdaten für eine nachfolgende Authentifizierung oder Decodierung ausgewertet werden. Somit können also auch ein oder mehrere gerätespezifische Druckwerte bestimmter zugelassener Druckgeräte quasi als Fingerabdrücke für die Authentifizierung oder Dekodierung verwendet werden. Dabei werden die gemessenen Farbwerte oder eine relative Kontrastverteilung der gedruckten Farbwerte beispielsweise per Internet an das Kameragerät oder Smartphone zur Auswertung bzw. Authentifizierung übertragen. Dabei sind die Kontraste oder Farbwerte der Informationsfarbwerte und Störfarbwerte möglichst wenig und gerade nur soweit unterschiedlich, dass sie von den Kamerageräten oder Smartphones zur Authentifizierung sicher diskriminiert werden können. Dadurch wird die Authentifizierung noch fälschungssicherer.

Während der Erkennung der Bildinformationsdaten durch das Kameragerät oder Smartphone ist nicht zwangsläufig eine Internetverbindung notwendig, wenn die zur Authentifizierung der jeweiligen Bildinformationsdaten notwendigen Decodierdaten vorher heruntergeladen worden sind. Dadurch ist eine Authentifizierung in Echtzeit möglich, indem das Kameragerät oder Smartphone die Authentifizierung instantan vornimmt und anzeigt.

Ein weiterer Vorteil der vorliegenden Erfindung besteht in darin, dass es auch einfach und kostengünstig für Endkunden einsetzbar ist. Es kann ähnlich einigen Bar-/QR-Code Applikationen auf Smartphones eingesetzt werden, und die Bedienung erfordert keine speziellen Kenntnisse. Die Installation und Aktualisierung von Erkennungs-Software auf den Kamerageräten oder Smartphones erfolgt beispielsweise durch den Apple App-Store oder Google Play Store oder dergleichen.

Durch eine einfache und leicht permutierbare Codierung bzw. Störkodierung und durch die einfache Übertragung von für die Authentifizierung notwendigen Decodier-Daten an das Kameragerät oder Smartphone läßt sich die Erzeugung der fälschungssicheren Bildinformationsdaten in bestimmten Zeitabständen mit nur sehr geringem Aufwand ändern.

Eine bevorzugte Ausführungsform gemäß der vorliegenden Erfindung ist in nachfolgenden Zeichnungen und in einer detaillierten Beschreibung dargestellt, soll aber die vorliegende Erfindung nicht darauf begrenzen.

### Dabei zeigen

Fig. 1 einen Bildbereich mit einem ersten Raster mit entsprechenden ersten Rasterbereichen und einem darin angeordneten Logo-Bereich;
Fig. 2 den Bildbereich mit dem ersten Raster, wobei die ersten Rasterbereiche jeweils mit einem Informationsbildpunkt ausgefüllt sind;
Fig. 3 eine obere Hälfte des Bildbereichs von Fig. 2 mit dem ersten Raster, wobei die ersten Rasterbereiche jeweils mit dem jeweiligen Informationsbildpunkt und zusätzlich mit Störpixeln ausgefüllt sind;
Fig. 4 eine schematische Darstellung eines Teils des Bildbereichs mit dem ersten Raster, das durch dicke Linien gekennzeichnet ist und das durch ein schachbrettartiges, zweites Raster unterteilt ist;
Fig. 5 eine schematische Darstellung eines Teils des Bildbereichs mit dem ersten Raster und dem zweiten Raster, wobei das zweite Raster mit jeweiligen Farbwerten ausgefüllt ist;
Fig. 6 ein Diagramm mit einer Farbwerteskala und aufgetragenen Informationsfarbwerten und Störfarbwerten.

### Detaillierte Beschreibung eines Ausführungsbeispiels

Ziel des erfindungsgemäßen Verfahrens ist es, zunächst fälschungssicher druckbare Bildinformationsdaten aus bestimmten Informationsdaten zu erzeugen, um anschließend die entsprechend auf Papier, Karton oder Verpackungen gedruckte Bildinformationsdaten wiederzuerkennen und zu authentifizieren.

Dabei werden die bestimmten Informationsdaten in eine Form von binären Informationsbildpunkten gebracht, was dadurch geschieht, dass die Informationsdaten durch eine bestimmte Codier-Regel in die binären Informationsbildpunkte überführt werden. Dabei werden die erzeugten binären Informationsbildpunkte rasterartig in einem ersten Raster und jeweiligen ersten Rasterbereichen R1 innerhalb eines Bildbereichs angeordnet. Dabei kann das erste Raster ein eindimensionales oder ein zweidimensionales Raster sein, wie beispielsweise wie ein Strich-Barcode oder ein Matrix-Barcode. Dreidimensionale Raster sind auch denkbar, wenngleich dazu speziellere Drucker zum Druck nötig werden.

Erfindungsgemäß wird das erste Raster bzw. die darin befindlichen ersten Rasterbereiche R1 durch ein zweites Raster unterteilt, so dass in dem jeweiligen ersten Rasterbereich R1 eine Vielzahl an zweiten Rasterbereichen R2 erzeugt wird. Dabei ist die Vielzahl mindestens zwei oder mehr. Bevorzugt wird die Unterteilung in die zweiten Rasterbereiche R2 schachbrettförmig, balkenförmig oder kuchensegmentförmig vorgenommen, wobei andere Aufteilungsformen auch möglich sind.

In dem jeweiligen ersten Rasterbereich R1 wird durch eine Informationsfeldzuordnungsregel einer der zweiten Rasterbereiche R2 als ein Informationsfeld Ixy für den jeweiligen Informationsbildpunkt bestimmt, wobei gleichzeitig die übrigen zweiten Rasterbereiche R2 des jeweiligen ersten Rasterbereichs R1 als Störfelder Sxy bestimmt werden.

Gemäß dem binären Wert 1 oder 0 des Informationsbildpunkts wird dem jeweiligen Informationsfeld Ixy bei einem Wert 1 ein erster Informationsfarbwert IF1 und bei einem Wert 0 ein zweiter Informationsfarbwert IF0 zugeordnet. Die Farbwertzuordnung wird gemäß einer Informationsfarbwertzuordnungsregel vorgenommen. Dabei ist der zweite Informationsfarbwert IF0 unterschiedlich zum ersten Informationsfarbwert IF1.

Den jeweiligen Störfeldern Sxy wird gemäß einer Störfarbwertzuordnungsregel jeweilige Störfarbwerte zugeordnet. Dadurch soll eine spätere Erkennung und Differenzierung der Informationsfelder Ixy von den Störfeldern Sxy und entsprechend eine Erkennung des ersten IF1 und des zweiten Informationsfarbwerts IF0 erschwert werden.

Die Farbwerte der zweiten Rasterbereiche mit den jeweiligen ersten IF1 und zweiten Informationsfarbwerten IF0 und den Störfarbwerten werden schließlich als die Bildinformationsdaten abgespeichert und bevorzugt für ein Drucken auf dem Papier, Karton oder den Verpackungen bereitgestellt.

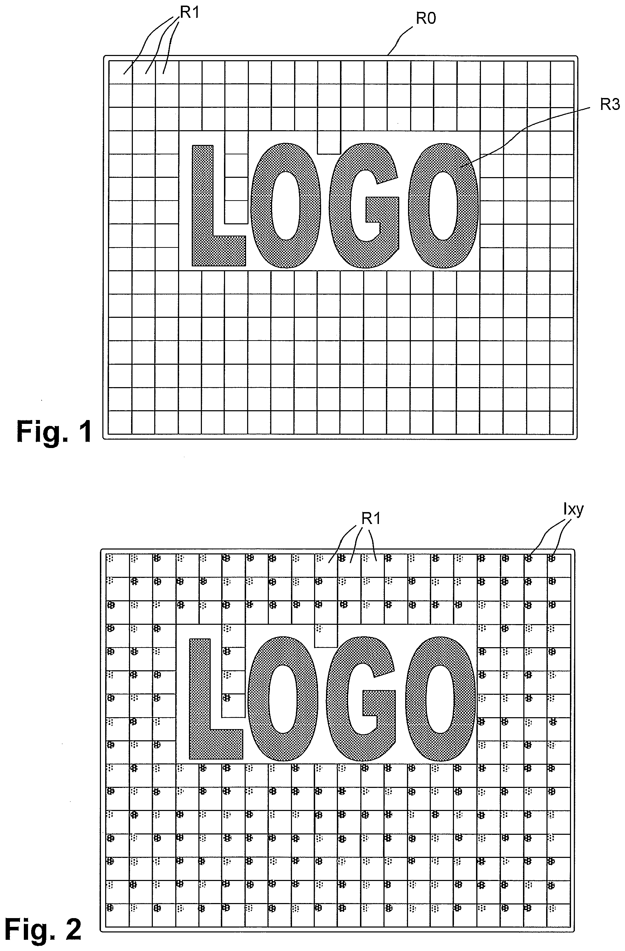

Fig. 1 zeigt ein Beispiel des Bildbereichs R0, der durch das erste Raster mit den entsprechenden ersten Rasterbereichen R1 unterteilt ist. In dem Bildbereich R0 kann bevorzugt zusätzlich auch ein Logo-Bereich R3 angeordnet sein. Bevorzugt ist der Logo-Bereich R3 im Bildbereich so angeordnet, dass der Logo-Bereich R3 von den ersten Rasterbereichen R1 teilweise oder ganz umgeben ist. Bevorzugt sind die ersten Rasterbereiche R1 getrennt vom Logo-Bereich R3, so dass sie sich nicht überlappen. Dabei können die ersten Rasterbereiche R1 beispielsweise den Logo-Bereich R3 teils oder ganz umgeben. Möglich ist aber auch, dass ein Logo und/oder andere Schriftzeichen durch die Störfelder Sxy dargestellt werden.

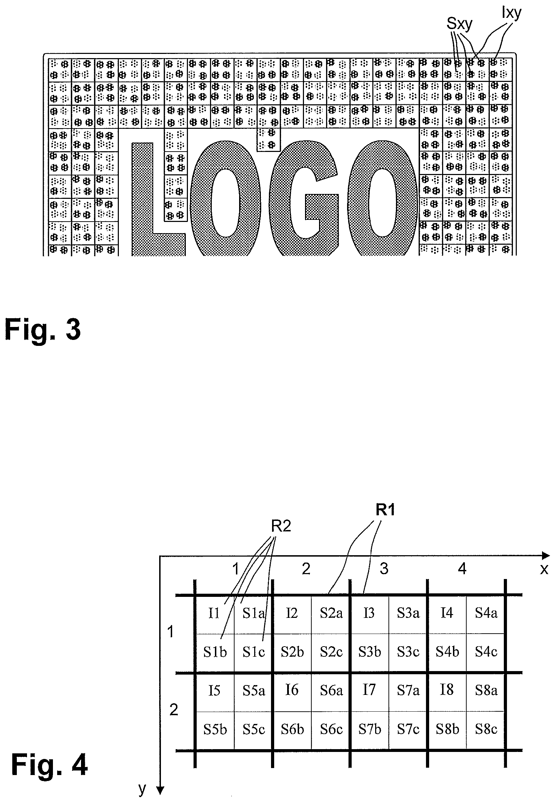

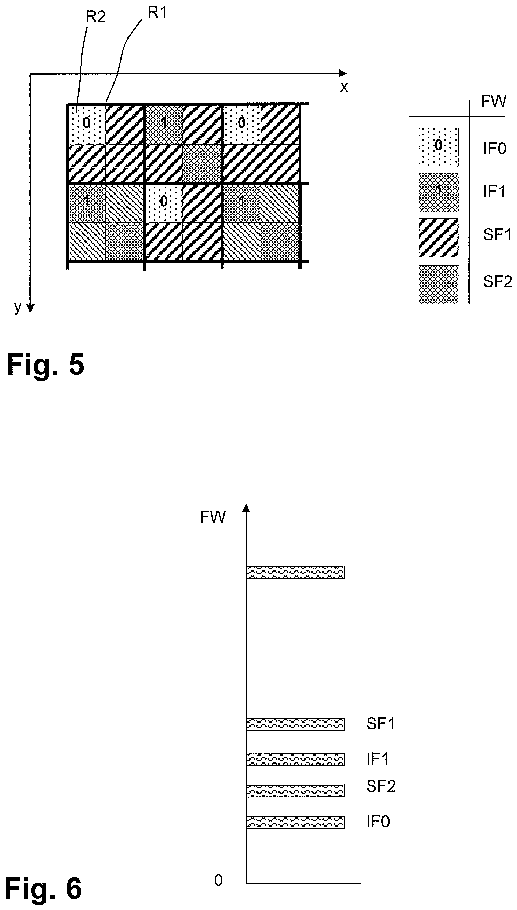

Die ersten Rasterbereiche R1 werden durch das zweite Raster unterteilt. Im vorliegenden Beispiel werden vier schachbrettartig angeordnete zweite Rasterbereiche R2 pro ersten Rasterbereich R1 erzeugt. In Fig. 1-3 sind die Bereichsunterteilungen der zweiten Rasterbereiche R2 nicht durch Linien dargestellt, wie sie jedoch beispielsweise in Fig. 4 und Fig. 5 dargestellt sind. Im vorliegenden Beispiel wird jeweils der obere linke Rasterbereich R2 des jeweiligen ersten Rasterbereichs R1 als das Informationsfeld Ixy bestimmt, und die übrigen drei Rasterbereiche R2 werden als die Störfelder Sxy bestimmt.

Fig. 2 zeigt den Bildbereich R0, wobei in den Informationsfeldern Ixy jeweils die Informationsbildpunkte angeordnet sind, und wobei die Informationsbildpunkte entweder durch eine hellere oder vergleichsweise eine etwas dunklere Schwärzung dargestellt sind. Auf diese Weise werden Informationsbildpunkte matrixartig verteilt.

Fig. 3 zeigt die obere Hälfte des Bildbereichs R0 aus Fig. 2, jedoch mit zusätzlich in den jeweiligen Störfeldern Sxy angeordneten Störbildpunkten. Dabei werden die Störbildpunkte bevorzugt mit einem Farbwert erzeugt, der sich nur geringfügig von den Farbwerten der Informationsbildpunkte unterscheidet. Bevorzugt können die Farbwerte der Störbildpunkte zu den Informationsbildpunkten aber auch sehr stark kontrastiert sein, um dadurch die Informationsbildpunkte farblich zu überdecken oder zu übertönen. Auf diese Weise können also die Störbildpunkte um die Informationsbildpunkte so angeordnet und farblich erzeugt werden, um möglichst viel Störung zu erzeugen und dabei die Informationsbildpunkte unkenntlicher zu machen.

Fig. 4 zeigt eine schematische Darstellung einer bevorzugten Anordnung der ersten Rasterbereiche R1, die durch starke Linien gekennzeichnet unterteilt sind, und der zweiten Rasterbereiche R2, die durch dünne Linien getrennt gekennzeichnet sind. Dabei sind die zweiten Rasterbereiche R2 eines ersten Rasterbereichs R1 jeweils in das eine Informationsfeld I1, I2 ― I8 als Ixy und in die übrigen Störfelder S1a-S1c― S8a-S8c als Sxy aufgeteilt. Dabei sind die Informationsfelder Ixy und die Störfelder Sxy matrixartig über eine X- und eine Y-Koordinate gekennzeichnet. Andere, wie beispielsweise kuchensegmentförmige Anordnungen oder Aufteilungen sind prinzipiell ebenso denkbar.

Fig. 5 zeigt beispielartig die Informationsfelder Ixy und die Störfelder Sxy mit jeweils einem entsprechenden Farbwert gefüllt. Dabei werden den jeweiligen Informationsfeldern Ixy abhängig vom Wert des Informationsbildpunkts bei einem Wert 1 ein erster Informationsfarbwert IF1 und bei einem Wert 0 ein zweiter Informationsfarbwert IF0 zugeordnet, wobei die Zuordnung gemäß einer Informationsfarbwertzuordnungsregel geschieht. Den Störfeldern Sxy werden gemäß einer Störfarbwertzuordnungsregel jeweilige Störfarbwerte zugeordnet. Im vorliegenden Beispiel werden dem jeweiligen Störfeld Sxy entweder ein erster Störfarbwert SF1 oder ein zweiter Störfarbwert SF2 zugeordnet. Dabei werden der erste Störfarbwert SF1 oder der zweite Störfarbwert SF2 bevorzugt so zugeordnet, dass die Summe über alle Farbwerte eines ersten Rasterbereichs R1 gleich ist. In anderen Worten wird bei einem Informationsfeld Ixy mit einem kleinen Farbwert IF0 drei in der Summe große Farbwerte als Störfarbwerte bestimmt und bei einem Informationsfeld Ixy mit einem großen Farbwert IF1 drei in der Summe kleinere Farbwerte verglichen mit dem großen Farbwert als Störfarbwerte bestimmt.

Als Farbwert ist hierbei eine zu druckende Farbe definiert, die eine bestimmte Farbe oder Farbkomposition und eine bestimmte Farbdichte umfasst. Meistens werden die Farben oder Farbwerte, die in diesem Dokument gleichbedeutend sind, als Farbraster durch aufgebracht Punkte erzeugt. Dabei wird das Farbraster aus einer Komposition von Grundfarben erzeugt, die jeweils mehr oder weniger dicht aufgebracht oder gedruckt werden. Beispielsweise sind die Farbwerte aus Druckfarben, wie beispielsweise rot, grün, blau, gelb und schwarz zusammengesetzt. Durch weniger dichte Farbpunkte einer Farbe wird eine hellere Farbe erzeugt, wohingegen durch ein dichteres Drucken der Farbpunkte der gleichen Farbe eine dunklere Farbe erzeugt wird. Im Folgenden wird von Farbwert oder gleichbedeutend von Farbe gesprochen, wobei die Erzeugung des Farbwerts bevorzugt durch das Farbpunktraster erfolgt. Denkbar ist jedoch auch eine Erzeugung der unterschiedlichen Farbwerte durch verschiedene Farbflüssigkeiten. Bevorzugter wird der jeweilige Farbwert jedoch als Punktraster oder als Punkteverteilung mit einer bestimmten Punktedichte erzeugt.

Bevorzugt sind alle Farbwerte, wie der erste IF1 und der zweite Informationsfarbwert IF0 und die Störfarbwerte von einem konventionellen Druckergerät druckbar. Dabei sind die Drucker ausgebildet, den jeweiligen Farbwert aus dessen Druckerfarben zu erzeugen, so wie beispielsweise bei einem Auflagendruck oder einem Rasterdruck oder auch bei einem S/W- oder Farblaserdruck oder bei einem Tintenstrahldruck.

Bevorzugt werden der erste Informationsfarbwert IF1, der zweite Informationsfarbwert IF0 und eine Größe des Informationsfeldes Ixy so bestimmt, dass der jeweilige Informationsbildpunkt mit dem bloßen Auge nicht wahrnehmbar ist. Dabei sind der erste IF1 und der zweite Informationsfarbwert IF0 bevorzugt so bestimmt, dass das Informationsfeld Ixy mit weniger als mit 25% einer Farbe ausfüllt ist. Dabei ist die bevorzugte Farbe beispielsweise gelb, die für das menschliche Auge besonders schwer zu erkennen ist. Als Größe für den zweiten Rasterbereich R2 und insbesondere für das Informationsfeld Ixy wird bevorzugt 0,01 - 0,1 qmm oder ein Durchmesser von 0,11 - 0,36 mm bestimmt. Der erste Rasterbereich R1 ist dabei bevorzugt viermal so groß wie der zweite Rasterbereich R2 oder größer. Somit werden die Informationsbildpunkte nicht nur klein, sondern auch weiter verteilt und sind mit dem Auge nur noch unter dem Mikroskop zu erkennen. Bevorzugt ist dabei die Farbdifferenzierung zwischen dem ersten Informationsfarbwert IF1 und dem zweiten Informationsfarbwert IF0 so gering bestimmt, dass diese mit dem menschlichen Auge unter dem Mikroskop nicht differenzierbar sind.

Bevorzugt wird durch die Informationsfeldzuordnungsregel das jeweilige Informationsfeld Ixy immer an der gleichen Stelle im jeweiligen ersten Rasterbereich R1, oder in anderen Worten immer im gleichen zweiten Rasterbereich R2 innerhalb des jeweiligen ersten Rasterbereichs R1 angeordnet. Alternativ kann das Informationsfeld Ixy gemäß der Informationsfeldzuordnungsregel aber auch in wechselnden zweiten Rasterbereichen R2 benachbarter erster Rasterbereiche R1 angeordnet werden.

Die Störfarbwertzuordnungsregel der jeweilige Störfarbwert für das jeweilige Störfeld Sxy werden so bestimmt, dass dabei ein bestimmter gemittelter Farbwert im jeweiligen ersten Rasterbereich R1 gemittelt über das Informationsfeld Ixy und die übrigen Störfelder Sxy erzeugt wird.

Bevorzugt werden die bestimmten gemittelten Farbwerte der ersten Rasterbereiche R1 so erzeugt, dass dabei entweder ein erster oder ein zweiter bestimmter gemittelten Farbwert erzeugt wird. Bevorzugt werden die bestimmten gemittelten Farbwerte dabei so bestimmt, dass die bestimmten gemittelten Farbwerte über benachbarte erste Rasterbereiche R1 schachbrettartig benachbart angeordnet sind. Eine Erzeugung einer Vielzahl an bestimmten gemittelten Farbwerten ist dabei auch denkbar. Auf diese Weise sind die benachbarten ersten Rasterbereiche R1 besser voneinander diskriminierbar.

Bevorzugt werden die bestimmten gemittelten Farbwerte der ersten Rasterbereiche R1 so bestimmt, dass durch sie eine zweite Information eincodiert übertragen wird. Beispielsweise kann die zweite Information eine lesbare Information sein. Beispielsweise kann die zweite Information ein Druckdatum und/oder eine Angabe zu einer Druckcharge oder einem Druckergerät sein. Bevorzugt kann die zweite Information aber auch außerhalb des Bildbereichs R0 oder als Teil des Logo-Bereichs R3 angeordnet sein.

Bevorzugt werden die bestimmten gemittelten Farbwerte der ersten Rasterbereiche R1 als mindestens ein erster oder ein zweiter bestimmter gemittelter Farbwert so bestimmt, dass der bestimmte erste gemittelte Farbwert dem ersten Informationsfarbwert IF1 und der der bestimmte zweite gemittelte Farbwert dem zweiten Informationsfarbwert IF0 entspricht.

Bevorzugt wird der jeweilige Störpixelfarbwert so bestimmt, dass er einen geringeren Kontrastunterschied als 25% zum ersten Informationsfarbwert IF1 aufweist. Noch bevorzugter liegt der Kontrastunterschied dabei unter 5%.

Bevorzugt ist die Vielzahl der zweiten Rasterbereiche R2 pro erstem Rasterbereich R1 größer oder gleich drei, um in dem jeweiligen erstem Rasterbereich R1 neben dem einen Informationsfeld Ixy mindestens zwei Störfelder Sxy zu bilden. Dabei werden im Falle, dass dem Informationsfeld Ixy der erste Informationsfarbwert IF1 zugewiesen wird, bevorzugt einem ersten Störfeld ein erster Störpixelfarbwert SF1 zugewiesen, der höher ist als der erste Informationsfarbwert IF1, und einem zweiten Störfeld ein zweiter Störfarbwert SF2 zugewiesen, der geringer ist als der erste Informationsfarbwert IF1.

Bevorzugt wird der erste Störpixelfarbwert SF1 nur um so viel höher als der erste Informationsfarbwert IF1 bestimmt, um gerade noch zuverlässig durch das Kameragerät diskriminiert erkannt werden zu können. Bevorzugt wird dabei der zweite Störfarbwert SF2 nur um so viel niedriger als der erste Informationsfarbwert IF1 bestimmt, um gerade noch zuverlässig durch das Kameragerät diskriminiert erkannt werden zu können.

Bevorzugt ist dabei auch eine Vielzahl von vier oder neun zweiten Rasterbereichen R2 zu einem ersten Rasterbereich R1. Andere Unterteilungsvielzahlen sind ebenso möglich.

Bevorzugt wird durch die Störfarbwertzuordnungsregel über die Störfelder die zweite oder eine weitere Information durch die entsprechenden Bildinformationsdaten übertragen.

Bevorzugt wird die zweite Information dabei auch zu einer verschlüsselten Codierung der Informationsdaten in die Form der binären Informationsbildpunkte verwendet. Beispielsweise kann dadurch die Codier-Regel permutativ geändert werden.

Bevorzugt werden durch die zweite Information ein Logo, ein oder mehrere Schriftzeichen und/oder ein Bild abgebildet. Durch die zweite Information ist eine Übertragung der Druck-Charge, des Druckergeräts und/oder des Druckdatums möglich. Die zweite Information ist alternativ auch am Rande des Bildbereichs R0 oder im Log-Bereich R3 druckbar.

Bevorzugt umfasst die zweite Information dabei gemessene Farbwerte, die von einem Druck durch ein Druckergerät stammen und davon gemessen worden sind. Auf diese Weise lassen sich druckergerätspezifische Farbwerte messen und an das Kameragerät oder Smartphone zur Authentifizierung oder Decodierung übermitteln.

Bevorzugt ist die Störfarbwertzuordnungsregel ausgebildet, durch die jeweiligen Störfelder Sxy die zweite Information abzubilden oder zu übertragen. Dabei wird die zweite Information bevorzugt durch eine Funktion in Abhängigkeit von den Informationsdaten bestimmt. Bevorzugt ist diese Funktion, die ein Algorithmus sein kann, eine Funktion zur Bildung einer Quersumme, eines Vorzeichenwechsels, einer Quadratur oder einer anderen Funktion aus den Informationsdaten.

Bevorzugt kann die Codierung der Informationsdaten in die Form der binären Informationsbildpunkte beispielsweise als binärer eindimensionaler oder zweidimensionaler Barcode, als Buchstaben- oder Zifferntext vorgenommen werden.

Bevorzugt können die Informationsdaten eine Seriennummer und/oder Produktdaten umfassen. Bevorzugt können die Seriennummer und/oder die Produktdaten auch in der die zweite Information eincodiert werden.

Ein Druck der Bildinformationsdaten kann auf allen bedruckbaren Materialien, wie beispielsweise Papier, Karton, Verpackungen und dergleichen vorgenommen werden.

### Decodierung - Authentifizierung

Indem der erste Informationsfarbwert IF1 und der zweite Informationsfarbwert IF0 mit einem geringen Farb- oder Kontrastunterschied bestimmt werden, lässt sich auch eine automatisierte Erkennung und Differenzierung nur mit großen Unsicherheiten vornehmen. Bevorzugt werden dabei der erste IF1 und der zweite Informationsfarbwert IF0 als Prozentuale Farbwerte eines bestimmten Störfarbwerts mit genügend großer Farbdichte, um den bestimmten Störfarbwert sicher messen zu können, bestimmt. Dabei wird beispielsweise dann der erste Informationsfarbwert IF1 als 20% des bestimmten Störfarbwerts und der zweite Informationsfarbwert IF0 beispielsweise als 17% des bestimmten Störfarbwerts bestimmt. UnterKenntnis dieser Prozentzahlen kann eine Authentifizierung sicherer vorgenommen werden.

Ein erfindungsgemäßes Verfahren zur Erkennung und Decodierung der gedruckten Bildinformationsdaten im Bildbereich R0, die wie oben beschrieben erzeugt und auf Papier, Karton, Verpackungsschachteln, Aufklebern oder dergleichen gedruckt worden sind, umfasst im Wesentlichen folgende Schritte. Die Erkennung und Decodierung wird dabei bevorzugt durch ein Mikrokontroller gestütztes Kameragerät, eine Kamera oder ein Scanner in Verbindung mit einem Personal-Computer, einem Smartphone oder dergleichen durchgeführt, für die nachfolgend der Begriff Kameragerät verwendet wird.

Zunächst wird das Kameragerät bevorzugt anhand von mindestens einer gut sichtbaren oder erkennbaren Markierung, die sich im oder am gedruckten Bildbereich befindet, ausgerichtet. Beispielsweise kann als Markierung ein bestimmtes Logo mit einer farblich kontrastreichen Umrandung dienen. Nachdem das Kameragerät ausgerichtet ist, wird ein Bild mit dem Bildbereich R0 aufgenommen und abgespeichert. Bevorzugt werden für die Ausrichtung des Kamerageräts auch Erkennungsalgorithmen eingesetzt, die in Echtzeit detektieren und anzeigen, ob und wie das Kameragerät ausgerichte ist und/oder werden soll. Bevorzugt wird bei der automatischen Detektion einer bei genügend guter Ausrichtung das Bild automatisch ausgelöst und aufgenommen. Das Bild umfasst dabei den Bildbereich R0 und die darin angeordneten, gedruckten Bildinformationsdaten.

Durch Anwenden eines Mustererkennungsalgorithmus auf das Bild, der ausgebildet ist, das erste Raster mit den ersten Rasterbereichen R1 und das zweite Raster mit den zweiten Rasterbereichen R2 zu erkennen. Bevorzugt wird das Bild dazu vorher richtig ausgerichtet, gedreht, entzerrt und auf den Bildbereich R0 beschnitten. Bevorzugt umfasst der Mustererkennungsalgorithmus einen Vergleichsalgorithmus mit einem bestimmten Muster. Für die Erkennung der ersten R1 und zweiten Rasterbereiche R2 wird bevorzugt eine Histogramm-Analyse vorgenommen, die die Zeilen und Spalten aufzeigt.

Durch Anwenden der Informationsfeldzuordnungsregel werden die Informationsfelder Ixy und die Störfelder Sxy aus den detektierten zweiten Rasterbereichen R2 bestimmt.

Anschließend werden die Farbwerte der jeweiligen Informationsfelder Ixy durch Anwendung einer weiteren Histogramm-Analyse über deren Farbwerte bestimmt. Bevorzugt werden bei der Histogramm-Analyse zwei Farbwerte mit jeweils signifikanter Häufung ermittelt und als der erste Informationsfarbwert IF1 und der zweite Informationsfarbwert IF0 bestimmt.

Bevorzugt ist dabei die Histogrammanalyse für die Erkennung und Diskriminierung der Farbwerte so ausgebildet, dass nachdem grob der erste Informationsfarbwert IF1 erkannt wird, im Bereich des ersten Informationsfarbwerts IF1 mit einer höheren Auflösung die vorhandenen Farbwerte analysiert und diskriminiert werden. Dabei werden dann der erste IF1 und der zweite Informationsfarbwert IF0 und die Störfarbwerte voneinander diskriminiert. Insbesondere wird auf diese Weise bevorzugt der erste Informationsfarbwert IF1 von den zwei angrenzenden Störfarbwerten SF1 und SF2 diskriminiert, wodurch der erste Informationsfarbwert IF1 und die zwei angrenzenden Störfarbwerte SF1 und SF2 als gemessene Farbwerte diskriminiert und somit wieder erkannt werden können.

Gemäß der Informationsfarbwertzuordnungsregel werden den Informationsfeldern Ixy mit dem ersten Informationsfarbwert IF1 der Wert 1 und den Informationsfeldern Ixy mit dem zweiten Informationsfarbwert IF0 der Wert 0 zugeordnet. Dadurch werden in den Informationsfeldern Ixy binäre Informationsbildpunkte erzeugt.

Anschließend wird eine Decodier-Regel, die der Codier-Regel entspricht, auf die binären Informationsbildpunkte angewendet und daraus die gedruckten oder rückgewonnenen Informationsdaten bestimmt.

Stimmen die rückgewonnenen Informationsdaten mit den Informationsdaten, die entweder abgespeichert oder durch einen Internetzugriff zugänglich sind, überein, so kann eine Authentizität der rückgewonnenen Informationsdaten durch das Kameragerät direkt oder indirekt angezeigt werden. Andernfalls kann eine Fälschung angezeigt werden. Bevorzugt wird eine Übereinstimmung der rückgewonnenen Informationsdaten mit den Informationsdaten ab einem bestimmten Korrelationsgrad angenommen, so dass einzelne abweichende Pixel nicht zu einem falsch-negativen Ergebnis führen.

Bevorzugt ist der Mustererkennungsalgorithmus dabei so ausgebildet, zunächst das erste Raster mit dessen ersten Rasterbereichen R1 durch eine Tiefpassfilterung als ein schachbrettartiges Muster zu erkennen, wonach Kanten eines tiefpassgefilterten Musters bestimmt werden und somit das erste Raster und die ersten Rasterbereiche R1 bestimmbar sind.

Die gemittelten Farbwerte der ersten Rasterbereiche R1 werden bestimmt, wobei durch eine weitere Histogramm-Analyse mindestens zwei signifikant diskriminierbare, gemittelte Farbwerte erkennbar sind, wobei eine Auswertung der gemittelten Farbwerte zu einer Authentifizierung der gedruckten Informationsdaten auch mit berücksichtigt werden.

Bevorzugt werden für eine Authentifizierung die Informationsdaten und, falls vorhanden, eine zweite Information aus den Störfeldern mit einer Datenbank verglichen werden, ob die Informationsdaten und, falls vorhanden, die zweite Information noch zulässig sind oder nicht. Bevorzugt wird die Datenbank dabei dargestellt durch einen Speicherbereich oder einen Speicherwert im Kameragerät oder durch Daten, die beispielsweise über das Internet zugänglich sind.

Bevorzugt sind die Decodier und Erkennungsalgorithmen so ausgebildet, den ersten IF1 und den zweiten Informationsfarbwert IF0 sicher von einander durch die Histogramm-Analyse zu diskriminieren, indem gemäß der dem Kameragerät bekannten Informationsfarbwertzuordnungsregel dem größeren Farbwert und dem kleineren Farbwert von beiden die entsprechenden binären Werte zugeordnet werden.

Bevorzugt sind die Decodier und Erkennungsalgorithmen auch so ausgebildet, den ersten SF1 und den zweiten Störfarbwert SF2 sicher von einander durch die Histogramm-Analyse zu diskriminieren, indem gemäß der dem Kameragerät bekannten Störfarbwertzuordnungsregel die entsprechenden Werte diskriminiert und zugeordnet werden.

Bevorzugt umfasst die Erkennung und Decodierung der gedruckten Bildinformationsdaten auch die folgenden Verfahrensschritte:
- Anwenden der Funktion, die beim Erzeugen der fälschungssicher gedruckten Bildinformationsdaten zum Erzeugen der zweiten Information in Abhängigkeit von den Informationsdaten angewendet wird, auf die Informationsdaten, um daraus eine berechnete zweite Information zu erhalten;
- Bestimmen einer detektierten zweiten Information aus den Störfeldern Sxy gemäß der ersten Zuordnungsregel; und
- Vergleichen der berechneten zweiten Information und der detektierten zweiten Information, wobei bei einer Übereinstimmung die Authentifizierung und bei einer Abweichung zwischen der berechneten zweiten Information und der detektierten zweiten Information eine Ablehnung der Authentifizierung erfolgt.

Zur Klarheit sei noch angeführt, dass unter einem Störpixel ein Störfeld Sxy mit einem Störfarbwert und unter einem Informationspixel ein Informationsfeld Ixy mit einem Informationsfarbwert zu verstehen ist.

Weitere mögliche Ausbildungsformen sind in den folgenden Ansprüchen beschrieben. Insbesondere können auch die verschiedenen Merkmale der oben beschriebenen Ausführungsformen miteinander kombiniert werden, soweit sie sich nicht technisch ausschließen.

Die In den Ansprüchen genannten Bezugszeichen dienen der besseren Verständlichkeit, beschränken aber die Ansprüche nicht auf die in den Figuren dargestellten Formen.

### Bezugszeichenliste

- FW: Farbwert
- Ixy: Informationsfeld
- Sxy: Störfeld
- IF1: erster Informationsfarbwert
- IF0: zweiter Informationsfarbwert
- SF1: erste Störfarbe
- SF2: zweite Störfarbe
- R0: Bildbereich
- R1: erster Rasterbereich
- R2: zweiter Rasterbereich
- R3: Logo-Bereich
- X,Y: Koordinaten

## Patentansprüche

1. **Verfahren zur Erzeugung** von fälschungssicher druckbaren Bildinformationsdaten aus Informationsdaten, folgende Schritte umfassend:
a) Codierung der Informationsdaten in eine Form von binären Informationsbildpunkten mit einem ersten (IF1) oder einem zweiten Informationsfarbwert (IF0) anhand einer Codier-Regel, wobei die binären Informationsbildpunkte rasterartig gemäß einem ersten Raster in jeweiligen ersten Rasterbereichen (R1) innerhalb eines Bildbereichs (R0) angeordnet sind;
b) Unterteilen der jeweiligen ersten Rasterbereiche (R1) durch ein zweites Raster in jeweilige zweite Rasterbereiche (R2), so dass pro erstem Rasterbereich (R1) eine Vielzahl von zweiten Rasterbereichen (R2) gebildet wird;
c) Bestimmen eines jeweiligen Informationsfelds (Ixy) von den jeweiligen zweiten Rasterbereichen (R2) des jeweiligen ersten Rasterbereichs (R1) gemäß einer ersten Zuordnungsregel und Bestimmen der übrigen zweiten Rasterbereiche (R2) als Störfelder (Sxy);
d) Zuordnen zu dem jeweiligen Informationsfeld (Ixy) abhängig vom Wert des Informationsbildpunkts bei einem Wert 1 einen ersten Informationsfarbwert (IF1) und bei einem Wert 0 einen zweiten Informationsfarbwert (IF0) gemäß einer Informationsfarbwertzuordnungsregel;
e) Bestimmen und Zuordnen zu den jeweiligen Störfeldern (Sxy) eines jeweiligen Störfarbwerts gemäß einer Störfarbwertzuordnungsregel; und
f) Abspeichern der zweiten Rasterbereiche mit den jeweiligen Informationsfarbwerten (IF1, IF0) und Störfarbwerten als die Bildinformationsdaten und Fertigstellen zu einem Drucken der Bildinformationsdaten;
**dadurch gekennzeichnet, dass**
g) in Schritt e) durch die Störfarbwertzuordnungsregel der jeweilige Störfarbwert für das jeweilige Störfeld (Sxy) so bestimmt wird, dass dabei ein vorbestimmter gemittelter Farbwert des ersten Rasterbereichs (R1) gemittelt über das Informationsfeld (Ixy) und die übrigen Störfelder (Sxy) erzeugt wird.

2. Verfahren gemäß Anspruch 1, wobei der erste Informationsfarbwert (IF1), der zweite Informationsfarbwert (IF0) und eine Größe des jeweiligen zweiten Rasterbereichs (R2) des Informationsfelds (Ixy) so bestimmt werden, dass
- das Informationsfeld (Ixy) mit weniger als mit 25% einer Farbe ausgefüllt ist; und/oder
- die Farbe des Informationsfeldes (Ixy) gelb ist; und/oder
- die Größe des zweiten Rasterbereichs (R2) und des Informationsfelds (Ixy) in einem Bereich von 0,01 - 0,1 mm² liegt oder der zweite Rasterbereich (R2) und das Informationsfeld (Ixy) einen Durchmesser von 0,11 - 0,36 mm aufweisen; und/oder
- der erste Rasterbereich (R1) mindestens viermal so groß ist wie der zweite Rasterbereich (R2),
so dass der jeweilige Informationsbildpunkt mit dem bloßen Auge nicht wahrnehmbar ist.

3. Verfahren gemäß Anspruch 2, wobei der erste (IF1) und der zweite Informationsfarbwert (IF0) den zweiten Rasterbereich (R2) mit weniger als mit 25% ausfüllt, der zweite Rasterbereich (R2) die Größe von 0,01 - 0,1 mm oder einen Durchmesser von 0,11 - 0,36 mm hat, und eine Fläche des ersten Rasterbereichs (R1) größer als viermal der Fläche des zweiten Rasterbereichs (R2) ist.

4. Verfahren gemäß einem der vorstehenden Ansprüche, wobei in Schritt c) durch die erste Zuordnungsregel das jeweilige Informationsfeld (Ixy) im jeweiligen ersten Rasterbereich (R1) entweder immer im gleichen zweiten Rasterbereich (R2) des jeweiligen ersten Rasterbereichs (R1) oder in wechselnden zweiten Rasterbereichen (R2) benachbarter erster Rasterbereiche (R1) angeordnet wird.

5. Verfahren gemäß einem der vorstehenden Ansprüche, wobei die bestimmten gemittelten Farbwerte der ersten Rasterbereiche (R1) als mindestens ein erster oder ein zweiter bestimmter gemittelter Farbwert bestimmt werden; und/oder
wobei die bestimmten gemittelten Farbwerte der ersten Rasterbereiche (R1) als mindestens ein erster oder ein zweiter bestimmter gemittelter Farbwert bestimmt werden und die bestimmten gemittelten Farbwerte über benachbarte erste Rasterbereiche (R1) schachbrettartig benachbart angeordnet werden.

6. Verfahren gemäß Anspruch 5, wobei die bestimmten gemittelten Farbwerte der ersten Rasterbereiche (R1) als mindestens ein erster oder ein zweiter bestimmter gemittelter Farbwert so bestimmt werden, dass die bestimmten gemittelten Farbwerte schachbrettartig benachbart angeordnet sind und der erste und der zweite bestimmte gemittelte Farbwert so bestimmt wird, dass darin eine zusätzliche zweite Information eincodiert und übertragen wird; oder
wobei die gemittelten bestimmten Farbwerte der ersten Rasterbereiche (R1) als mindestens ein erster oder ein zweiter bestimmter gemittelter Farbwert so bestimmt werden, dass der bestimmte erste gemittelte Farbwert dem ersten Informationsfarbwert (IF1) und der der bestimmte zweite gemittelte Farbwert dem zweiten Informationsfarbwert (IF0) entspricht.

7. Verfahren gemäß einem der vorstehenden Ansprüche, wobei der jeweilige Störpixelfarbwert so bestimmt wird, dass er einen geringeren Kontrastunterschied als 25% zum ersten Informationsfarbwert (IF1) und dabei bevorzugt einen geringeren Kontrastunterschied als 5% hat.

8. Verfahren gemäß einem der vorstehenden Ansprüche, wobei die Vielzahl der zweiten Rasterbereiche (R2) pro erstem Rasterbereich (R1) größer oder gleich drei ist, um in dem jeweiligen erstem Rasterbereich (R1) neben dem einen Informationsfeld (Ixy) mindestens zwei Störfelder (Sxy) zu bilden,
wobei im Falle, dass dem Informationsfeld (Ixy) der erste Informationsfarbwert (IF1) zugewiesen wird, einem ersten Störfeld ein erster Störpixelfarbwert (SF1) zugewiesen wird, der höher ist als der erste Informationsfarbwert (IF1), und einem zweiten Störfeld ein zweiter Störfarbwert (SF2) zugewiesen wird, der geringer ist als der erste Informationsfarbwert (IF1).

9. Verfahren gemäß Anspruch 8, wobei der erste Störpixelfarbwert (SF1) nur um so viel höher als der erste Informationsfarbwert (IF1) bestimmt wird, um gerade noch zuverlässig durch ein Kameragerät diskriminiert erkannt werden zu können; und/oder
wobei der zweite Störfarbwert (SF2) nur um so viel niedriger als der erste Informationsfarbwert (IF1) bestimmt wird, um gerade noch zuverlässig durch das Kameragerät diskriminiert erkannt werden zu können.

10. Verfahren gemäß einem der vorstehenden Ansprüche, wobei über bestimmt angeordnete Störfelder in dem ersten Raster durch eine Zuordnung von entsprechenden Störfarbwerten durch die Störfarbwertzuordnungsregel eine zweite Information in die Bildinformationsdaten übertragen wird; und/oder
wobei die Störfarbwertzuordnungsregel ausgebildet ist, durch die jeweiligen Störfelder (Sxy) eine zweite Information abzubilden oder zu übertragen; und/oder
wobei zusätzlich in den Bildinformationsdaten oder am Rande der Bildinformationsdaten eine Kennung eines Druckdatums oder einer Druckcharge angebracht ist, um durch die Kennung aktuell gedruckte und gemessene Farbwerte zu einer entsprechenden Decodierung zu übermitteln.

11. Verfahren gemäß Anspruch 6 oder 10, wobei die zweite Information in Schritt a) zu einer verschlüsselten Codierung der Informationsdaten in die Form der binären Informationsbildpunkte verwendet wird; und/oder
wobei durch die zweite Information ein Logo oder Schriftzeichen oder ein Bild abgebildet wird; und/oder
wobei durch die zweite Information eine Druckchargenkennung übertragen wird.

12. Verfahren gemäß Anspruch 6, 10 oder 11, den Verfahrensschritt umfassend:
Erzeugen der zweiten Information als eine Funktion in Abhängigkeit von den Informationsdaten, wobei die Funktion eine Quersumme, eine Inversion, eine Quadratur oder eine andere Funktion von den Informationsdaten ist.

13. **Verfahren** zur Erkennung und Decodierung von gedruckten Bildinformationsdaten in einem Bildbereich (R0), die gemäß den vorstehenden Ansprüchen 1-12 erzeugt und ausgedruckt worden sind, mit einem Mikrokontroller gestützten Kameragerät oder einem Smartphone, folgende Schritte umfassend:
a. Ausrichten des Kamerageräts auf den Bildbereich (R0) und Auslösen und Abspeichern eines Bildes mit den gedruckten Bildinformationsdaten;
b. Anwenden eines Mustererkennungsalgorithmus auf das Bild, der ausgebildet ist, den Bildbereich (R0), ein erstes Raster mit ersten Rasterbereichen (R1) und ein zweites Raster mit zweiten Rasterbereichen (R2) zu erkennen;
c. Bestimmen von Informationsfeldern (Ixy) und von Störfeldern (Sxy) aus den zweiten Rasterbereichen (R2) der jeweiligen ersten Rasterbereiche (R1) durch eine bestimmte erste Zuordnungsregel;
d. Bestimmen in den jeweiligen Informationsfeldern (Ixy) eines ersten Informationsfarbwerts (IF1) und eines zweiten Informationsfarbwerts (IF0) durch Anwenden einer Histogramm-Analyse über die Farbwerte der Informationsfelder (Ixy);
e. Zuordnen der jeweiligen binären Werte 1 oder 0 zu jedem der ersten Rasterbereiche (R1) anhand des darin detektierten ersten (IF1) oder zweiten Informationsfarbwerts (IF0) in den Informationsfeldern (Ixy) und einer Informationsfarbwertzuordnungsregel und dadurch bilden von binären Informationsbildpunkten;
f. Anwenden einer Decodier-Regel auf die binären Informationsbildpunkte und daraus bestimmen der gedruckten Informationsdaten
**dadurch gekennzeichnet, dass**
g. gemittelte Farbwerte der ersten Rasterbereiche (R1) bestimmt werden und durch eine weitere Histogramm-Analyse dabei mindestens zwei signifikant diskriminierbare, gemittelte Farbwerte erkennbar sind, wobei eine Auswertung der gemittelten Farbwerte zu einer Authentifizierung der gedruckten Informationsdaten mit berücksichtigt werden.

14. Verfahren gemäß Anspruch 13, wobei der Mustererkennungsalgorithmus so ausgebildet ist, zunächst das erste Raster mit dessen ersten Rasterbereichen (R1) durch eine Tiefpassfilterung als ein schachbrettartiges Muster zu erkennen, wonach Kanten eines tiefpassgefilterten Musters bestimmt werden und somit das erste Raster und die ersten Rasterbereiche (R1) bestimmbar sind; und/oder
wobei die Histogrammanalyse für die Erkennung und Diskriminierung der Farbwerte insbesondere in dem Bereich des ersten Informationsfarbwerts (IF1), der höher ist als der zweite Informationsfarbwert (IF0), mit höherer Auflösung als in einem anderen Farbwertbereich erfolgt; und/oder
wobei die Histogrammanalyse für die Erkennung und Diskriminierung des ersten Informationsfarbwerts (IF1) und des zweiten Informationsfarbwerts (IF0) einen bestimmten vorgegebenen minimalen oder maximalen Farbwertabstand berücksichtigt.

15. Verfahren gemäß Anspruch 13 oder 14, wobei für eine Authentifizierung die Informationsdaten und, falls vorhanden, eine zweite Information, die in den Störfeldern enthalten ist und daraus detektiert wird, mit einer Datenbank verglichen werden, ob die Informationsdaten und, falls vorhanden, die zweite Information zulässig sind oder nicht; und/oder
die folgenden Verfahrensschritte zusätzlich umfassend:
- Anwenden einer bekannten Funktion, die beim Erzeugen der fälschungssicher gedruckten Bildinformationsdaten zu einem Erzeugen einer zweiten Information in Abhängigkeit von den Informationsdaten angewendet wird, auf die Informationsdaten und daraus Bestimmen einer berechneten zweiten Information;
- Bestimmen einer detektierten zweiten Information aus den Störfeldern (Sxy) gemäß der ersten Zuordnungsregel; und
- Vergleichen der berechneten zweiten Information und der detektierten zweiten Information, wobei bei einer Übereinstimmung eine Authentifizierung und bei einer Abweichung eine Ablehnung der Authentifizierung erfolgt.

## Claims

1. **Method of generating** image information data, which can be printed in a forgery-proof manner, from information data, comprising the following steps:
a) encoding the information data into a form of binary information pixels with a first (IF1) or a second information color value (IF0) by means of an encoding rule, wherein the binary information pixels are arranged in a grid-like manner in accordance with a first grid in respective first grid regions (R1) within an image region (R0);
b) dividing the respective first grid regions (R1) into respective second grid regions (R2) by means of a second grid, so that a plurality of second grid regions (R2) are formed per each first grid region (R1);
c) determining a respective information field (Ixy) of the respective second grid regions (R2) of the respective first grid region (R1) in accordance with a first association rule and determining the other second grid regions (R2) as faulty fields (Sxy);
d) associating with the respective information field (Ixy), in dependence on the value of the information pixel, a first information color value (IF1) for a value 1 and a second information color value (IF0) for a value 0 in accordance with an information color value association rule;
e) determining and associating with the respective faulty fields (Sxy) a respective fault color value in accordance with a fault color value association rule; and
f) storing the second grid regions with the respective information color values (IF1, IF0) and fault color values as image information data and completing for a printing of the image information data;
**characterized in that**
g) in step e), the respective fault color value for the respective faulty field (Sxy) is determined by means of the fault color value association rule by generating a predefined averaged color value of the first grid region (R1), averaged over the information field (Ixy) and the other faulty fields (Sxy).

2. Method according to Claim 1, the first information color value (IF1), the second information color value (IF0) and a size of the respective second grid region (R2) of the information field (Ixy) being determined such that
- the information field (Ixy) is filled with less than 25% of a color
and/or
- the color of the information field (Ixy) is yellow and/or
- the size of the second grid region (R2) and of the information field (Ixy) is within a range from 0.01-0.1 mm² or the second grid region (R2) and the information field (Ixy) have a diameter of 0.11-0.36 mm and/or
- the first grid region (R1) is at least four times as large as the second grid region (R2) so that the respective information pixel is not perceivable by the naked eye.

3. Method according to Claim 2, where the first (IF1) and the second information color value (IF0) fill the second grid region (R2) by less than 25%, the second grid region (R2) has a size of 0.01-0.1 mm² or a diameter of 0.11-0.36 mm and an area of the first grid region (R1) is larger than four times the area of the second grid region (R2).

4. Method according to one of the above Claims, where in step c), due to the first association rule, the respective information field (Ixy) in the respective first grid region (R1) is either always arranged in the same second grid region (R2) of the respective first grid region (R1) or in changing second grid regions (R2) of adjacent first grid regions (R1).

5. Method according to one of the above Claims, where the determined averaged color values of the first grid regions (R1) are determined to be at least one first or one second determined averaged color value; and/or
where the determined averaged color values of the first grid regions (R1) are determined to be at least one first or one second determined averaged color value and the determined averaged color values are arranged in checker-board adjacent form over adjacent first grid regions (R1).

6. Method according to Claim 5, where the determined averaged color values of the first grid regions (R1) are determined to be at least one first or one second determined averaged color value such that the determined averaged color values are arranged in checker-board adjacent form and the first and the second determined averaged color values are determined such that an additional second piece of information is encoded and transferred therein; or
where the determined averaged color values of the first grid regions (R1) are determined to be at least one first or one second determined averaged color value such that the determined first averaged color value corresponds to the first information color value (IF1) and the determined second averaged color value corresponds to the second information color value (IF0).

7. Method according to one of the above Claims, where the respective fault pixel color value is determined such as to have a contrast difference with respect to the first information color value (IF1) of less than 25% and preferably less than 5%.

8. Method according to one of the above Claims, the plurality of second grid regions (R2) per first grid region (R1) being larger than or equal to three so as to form in the respective first grid region (R1) at least two faulty fields (Sxy) in addition to the one information field (Ixy),
where in the case that the first information color value (IF1) is associated with the information field (Ixy), a first faulty field is associated with a first fault pixel color value (SF1) higher than the first information color value (IF1) and a second faulty field is associated with a second fault color value (SF2) lower than the first information color value (IF1).

9. Method according to Claim 8 where the first fault pixel value (SF1) is determined to be higher than the first information color value (IF1) only to such a degree that it can still be reliably distinguished by a camera device; and/or
where the second fault pixel value (SF2) is determined to be lower than the first information color value (IF1) only to such a degree that it can still be reliably distinguished by a camera device.

10. Method according to one of the above Claims, where by means of specifically arranged faulty fields in the first grid, a second piece of information is transferred into the image information data by an association of respective fault color values by means of the fault color value association rule; and/or
where the fault color value association rule is adapted to image or transfer a second piece of information by means of the respective faulty fields (Sxy);
and/or
where in the image information data or on the edge thereof, an identifier of a printing data or of a print batch is applied so as to transfer, by means of the identifier, currently printed and measured color values for respective decoding.

11. Method according to Claim 6 or 10, where the second piece of information in step a) is used for encrypted encoding of the information data in the form of binary information pixels; and/or
where by means of the second piece of information, a logo or character or an image is imaged; and/or
where by means of the second piece of information, a print charge identifier is transferred.

12. Method according to Claim 6, 10 or 11, comprising the following method step:
generating the second piece of information as a function in dependence on the information data, the function being a sum of digits, an inversion, a square or a different function of the information data.

13. **Method** of recognizing and decoding printed image information data in an image region (R0) which were generated and printed according to the above Claims 1-12, by means of a microcontroller-supported camera device or a smartphone, comprising the following steps:
a. orienting the camera device towards the image region (R0) and triggering and storing an image with the printed image information data;
b. applying a pattern recognition algorithm to the image which is adapted to recognize the image region (R0), a first grid with first grid regions (R1) and a second grid with second grid regions (R2);
c. determining information fields (Ixy) and faulty fields (Sxy) from the second grid regions (R2) of the respective first grid regions (R1) by means of a defined first association rule;
d. determining a first information color value (IF1) and a second information color value (IF0) in the respective information fields (Ixy) by applying a histogram analysis over the color values of the information fields (Ixy);
e. associating the respective binary values 1 or 0 to each of the first grid regions (R1) by means of the first (IF1) or second information color value (IF0) detected therein in the information fields (Ixy) and an information color value association rule, forming binary information pixels in this manner;
f. applying a decoding rule to the binary information pixels and determining the printed information data therefrom,
**characterized in that**
g. averaged color values of the first grid regions (R1) are determined and, by means of an additional histogram analysis, at least two averaged color values can be significantly distinguished, an evaluation of the averaged color values being taken into account for authentication of the printed information data.

14. Method according to Claim 13, the pattern recognition algorithm being adapted to first recognize the first grid with its first grid regions (R1) as a checker-board pattern by low-pass filtering, after which edges of a low-pass-filtered pattern are determined and the first grid and the first grid portions (R1) can be determined; and/or
the histogram analysis for recognizing and distinguishing the color values, particularly inside the range of the first information color value (IF1) which is higher than the second information color value (IF0), taking place with a resolution which is higher than in a different color value range; and/or
the histogram analysis for recognizing and distinguishing the first information color value (IF1) and the second information color value (IF0) taking into account a specific predefined minimum or maximum color-value distance.

15. Method according to Claim 13 or 14, where for an authentication the information data and, if available, a second piece of information contained in the faulty fields and detected therefrom, are compared with a database, to see whether the information data and, if available, the second piece of information are permissible or not; and/or additionally comprising the following method steps:
- applying a known function which is used, during generation of the image information data printed in a forgery-proof manner to generate a second piece of information in dependence on the information data, to the information data, and determining a calculated second piece of information therefrom;
- determining a detected second piece of information from the faulty fields (Sxy) according to the first association rule; and
- comparing the calculated second piece of information and the detected second piece of information, where an authentication takes place in case of a match and, in case of a deviation, a refusal of authentication.

## Revendications

1. Procédé, destiné à générer des données d'informations d'image imprimables de manière infalsifiable à partir de données d'informations, comprenant les étapes suivantes, consistant à:
a) coder des données d'informations sous une forme de pixels d'informations binaires avec une première (IF1) ou une deuxième valeur de couleur d'informations (IF0) à l'aide d'une règle de codage, les pixels d'informations binaires étant placés en forme de trame selon une première trame dans des premières zones de trame (R1) respectives, à l'intérieur d'une zone d'image (R0);
b) diviser les premières zones de trame (R1) respectives par une deuxième trame en des deuxièmes zones de trame (R2) respectives, de sorte que soit formée par la première zone de trame (R1) une pluralité de deuxièmes zones de trame (R2);
c) déterminer un champ d'informations (Ixy) respectif des deuxièmes zones de trame (R2) respectives de la première zone de trame (R1) respective selon une première règle d'attribution et déterminer les deuxièmes zones de trame (R2) restantes comme étant des champs parasites (Sxy);
d) attribuer au champ d'informations (Ixy) respectif en fonction de la valeur du pixel d'informations pour une valeur 1 une première valeur de couleur d'informations (IF1) et pour une valeur 0 une deuxième valeur de couleur d'informations (IF0) selon une règle d'attribution de valeur de couleur d'informations;
e) déterminer et attribuer aux champs parasites (Sxy) respectifs une valeur de couleur parasite respective selon une règle d'attribution de valeurs de couleur parasite; et
f) mémoriser les deuxièmes zones de trame avec les valeurs de couleur d'informations (IF1, IF0) respectives et les valeurs de couleur parasite comme étant les données d'informations d'image et terminer par une impression des données d'informations d'image;
**caractérisé en ce que**
g) dans l'étape e), par la règle d'attribution de valeurs de couleur parasite, la valeur de couleur parasite respective pour le champ parasite (Sxy) respectif est déterminée de telle sorte qu'à cet effet est générée une valeur de couleur moyenne prédéfinie de la première zone de trame (R1) moyennée sur le champ d'informations (Ixy) et les champs parasites (Sxy) restants.

2. Procédé selon la revendication 1, la première valeur de couleur d'informations (IF1), la deuxième valeur de couleur d'informations (IF0) et une grandeur de la deuxième zone de trame (R2) respective du champ d'informations (Ixy) étant déterminées de telle sorte que
- le champ d'informations (Ixy) soit rempli à raison de moins de 25 % d'une couleur; et/ou
- la couleur du champ d'informations (Ixy) soit le jaune; et/ou
- la grandeur de la deuxième zone de trame (R2) et du champ d'informations (Ixy) se situe dans un ordre de 0,01 à 0,1 mm² ou la deuxième zone de trame (R2) et le champ d'informations (Ixy) présentent un diamètre de 0,11 à 0,36 mm; et/ou
- la première zone de trame (R1) correspond au moins au quadruple de la deuxième zone de trame (R2),
de telle sorte que le pixel d'information respectif ne soit pas perceptible à l'œil nu.

3. Procédé selon la revendication 2, la première (IF1) et la deuxième valeur de couleur d'informations (IF0) remplissant à raison de moins de 25 % la deuxième zone de trame (R2), la deuxième zone de trame (R2) ayant la grandeur de 0,01 à 0,1 mm² ou un diamètre de 0,11 à 0,36 mm, et une surface de la première zone de trame (R1) étant supérieure au quadruple de la surface de la deuxième zone de trame (R2).

4. Procédé selon l'une quelconque des revendications précédentes, dans l'étape c), par la première règle d'attribution, le champ d'informations (Ixy) respectif étant placé dans la première zone de trame (R1) respective, soit toujours dans la même deuxième zone de trame (R2) de la première zone de trame (R1) respective ou dans des deuxièmes zones de trame (R2) variables de premières zones de trame (R1) voisines.

5. Procédé selon l'une quelconque des revendications précédentes, les valeurs de couleur moyennes déterminées des premières zones de trame (R1) étant déterminées sous la forme d'au moins une première ou une deuxième valeur de couleur moyenne déterminée; et/ou les valeurs de couleur moyennes déterminées des premières zones de trame (R1) étant déterminées sous la forme d'au moins une première ou une deuxième valeur de couleur moyenne déterminée et les valeurs de couleur moyennes déterminées étant placées au voisinage mutuel à la manière d'un échiquier sur des premières zones de trame (R1) voisines.

6. Procédé selon la revendication 5, les valeurs de couleur moyennes déterminées des premières zones de trame (R1) étant déterminées sous la forme d'au moins une première ou une deuxième valeur de couleur moyenne déterminée de telle sorte que les valeurs de couleur moyennes déterminées soient placées au voisinage mutuel, à la manière d'un échiquier et que la première et la deuxième valeur de couleur moyenne déterminée soit déterminée de sorte qu'une deuxième information supplémentaire y soit encodée et transmise; ou
les valeurs de couleur moyennes déterminées des premières zones de trame (R1) étant déterminées sous la forme d'au moins une première ou une deuxième valeur de couleur moyenne déterminée, de telle sorte que la première valeur de couleur moyenne déterminée corresponde à la première valeur de couleur d'informations (IF1) et que la deuxième valeur de couleur moyenne déterminée corresponde à la deuxième valeur de couleur d'informations (IF0).

7. Procédé selon l'une quelconque des revendications précédentes, la valeur de couleur de pixel parasite respective étant déterminée de sorte à faire preuve d'un écart de contraste inférieur à 25 % avec la première valeur de couleur d'informations (IF1) et qu'elle à faire preuve à cet effet de préférence d'un écart de contraste inférieur à 5 %.

8. Procédé selon l'une quelconque des revendications précédentes, la pluralité des deuxièmes zones de trame (R2) par première zone de trame (R1) étant supérieure ou égale à trois, pour former dans la première zone de trame (R1) respective, outre l'un champ d'informations (Ixy), au moins deux champs parasites (Sxy),
dans le cas où au champ d'informations (Ixy) est attribuée la première valeur de couleur d'informations (IF1), il est attribué à un premier champ parasite une première valeur de couleur de pixel parasite (SF1) qui est supérieure à la première valeur de couleur d'informations (IF1), et il est attribué au deuxième champ parasite une deuxième valeur de couleur parasite (SF2) qui est inférieure à la première valeur de couleur d'informations (IF1).

9. Procédé selon la revendication 8, la première valeur de couleur de pixel parasite (SF1) étant déterminée pour n'être supérieure à la première valeur de couleur d'informations (IF1) que d'un niveau lui permettant d'être encore reconnue avec fiabilité de manière distincte par un appareil photo; et/ou la deuxième valeur de couleur parasite (SF2) étant déterminée pour n'être inférieure à la première valeur de couleur d'informations (IF1) que d'un niveau lui permettant d'être encore reconnue avec fiabilité de manière distincte par l'appareil photo.

10. Procédé selon l'une quelconque des revendications précédentes, sur des champs parasites placés de manière déterminée dans la première trame par une attribution de valeurs de couleur parasites correspondantes par la règle d'attribution de valeurs de couleur parasites, une deuxième information étant transmise dans les données d'informations d'image; et/ou
la règle d'attribution de valeurs de couleur parasite étant conçue pour reproduire ou pour transmettre par les champs parasites (Sxy) respectifs une deuxième information; et/ou
additionnellement, dans les données d'informations d'image ou au bord des données d'informations d'image étant apposée une identification d'une donnée d'impression ou d'un lot d'impression, pour transmettre par l'identification des valeurs de couleur actuellement imprimées et mesurées vers un décodage correspondant.

11. Procédé selon la revendication 6 ou 10, dans l'étape a), la deuxième information étant utilisée pour un codage crypté des données d'informations dans la forme des pixels d'informations binaires; et/ou
par la deuxième information étant reproduit(e) un logo ou un caractère ou une image; et/ou
par la deuxième information étant transmise une identification de lot d'impression.

12. Procédé selon la revendication 6, 10 ou 11, comprenant l'étape de procédé consistant à : générer la deuxième information comme une fonction dépendant des données d'informations, la fonction étant une somme transversale, une inversion, une quadrature ou une autre fonction des données d'informations.

13. Procédé, destiné à identifier et à décoder des données d'informations d'image imprimées dans une zone d'image (R0), qui ont été générées et imprimées selon les revendications 1 à 12 précédentes, à l'aide d'un appareil photo assisté par microcontrôleur ou d'un smartphone, comprenant les étapes suivantes, consistant à:
a. aligner l'appareil photo sur la zone d'image (R0) et déclencher et mémoriser une image contant les données d'informations d'image imprimées;
b. utiliser sur l'image un algorithme d'identification de motif qui est conçu pour identifier la zone d'image (R0), une première trame avec des premières zones de trame (R1) et une deuxième trame avec des deuxièmes zones de trame (R2);
c. déterminer des champs d'informations (Ixy) et des champs parasites (Sxy) à partir des deuxièmes zones de trame (R2) des premières zones de trame (R1) respectives par une première règle d'attribution déterminée;
d. déterminer dans les champs d'informations (Ixy) respectifs une première valeur de couleur d'informations (IF1) et une deuxième valeur de couleur d'informations (IF0) par application d'une analyse d'histogramme sur les valeurs de couleur des champs d'information (Ixy);
e. attribuer la valeur binaire respective 1 ou 0 à chacune des premières zones de trame (R1) à l'aide de la première (IF1) ou de la deuxième valeur de couleur d'informations (IF0) qui y a été détectée dans le champ d'informations (Ixy) et d'une règle d'attribution de valeurs de couleur d'informations et créer ainsi des pixels d'informations binaires;
f. appliquer une règle de décodage sur les pixels d'informations binaires et en déterminer les données d'informations imprimées,
**caractérisé en ce que**
g. des valeurs de couleur moyennes des premières zones de trame (R1) sont déterminées, et par une analyse d'histogramme supplémentaire, au moins deux valeurs de couleur moyennes significativement distinctibles sont identifiables, une évaluation des valeurs de couleur moyennes en une authentification des données d'informations imprimées étant prise en considération conjointement.

14. Procédé selon la revendication 13, l'algorithme d'identification de motif étant conçu de sorte à identifier d'abord la première trame avec ses premières zones de trame (R1) par un filtrage passebas comme étant un motif en échiquier, suite à quoi sont déterminées des arêtes d'un motif filtré passebas et la première trame et les premières zones de trame (R1) pouvant ainsi être déterminées; et/ou
l'analyse d'histogramme destinée à identifier et à distinguer les valeurs de couleur, notamment dans la zone de la première valeur de couleur d'informations (IF1) qui est supérieure à la deuxième valeur de couleur d'informations (IF0) s'effectuant avec une résolution plus élevée que dans une autre zone de valeur de couleur; et/ou
l'analyse d'histogramme destinée à identifier et à distinguer la première valeur de couleur d'informations (IF1) et la deuxième valeur de couleur d'informations (IF0) prenant en compte un certain écart minimum ou maximum de valeur de couleur prédéfini.

15. Procédé selon la revendication 13 ou 14, pour une authentification, les données d'informations et, si présente, une deuxième information, qui est contenue dans les champs parasites et y est détectée sont comparées avec une base de données, pour savoir si les données d'informations et, si présente, la deuxième information sont ou non fiables; et/ou comprenant additionnellement les étapes de procédé suivantes, consistant à:
- appliquer sur les données d'informations une fonction connue, qui est appliquée lors de la génération des données d'informations d'image imprimées de manière infalsifiable pour une génération d'une deuxième information en fonction des données d'informations et déterminer à partir de celle-ci une deuxième information calculée ;
- déterminer une deuxième information détectée à partir des champs parasites (Sxy) selon la première règle d'attribution; et
- comparer la deuxième information calculée et la deuxième information détectée, une authentification ayant lieu en cas de concordance et un rejet de l'authentification ayant lieu en cas de divergence.
